# EUROPÄISCHE PATENTANMELDUNG

(11) **EP 3 232 547 A1**
(43) Veröffentlichungstag der Anmeldung: **18.10.2017**
(21) Anmeldenummer: 17151127.2
(22) Anmeldetag: 12.01.2017
(51) Int. Cl.: H02K 21/02, H02K 16/02

(54) **VERFAHREN ZUM BETREIBEN EINER ELEKTRISCHEN MASCHINE UND ELEKTRISCHE MASCHINE**

(30) Priorität: 26.02.2016 DE 102016103470
(71) Anmelder: VOLKSWAGEN AKTIENGESELLSCHAFT, 38440 Wolfsburg (DE)
(72) Erfinder: Neuschl, Zdeno, 38173 Sickte (DE); Koch, Immo, 38126 Braunschweig (DE); Wetzel, Hermann, 38448 Wolfsburg (DE)
(74) Vertreter: Vogel, Andreas

(57) **Zusammenfassung**

Die vorliegende Erfindung betrifft ein Verfahren zum Betreiben einer elektrischen Maschine, welche einen Stator und einen relativ zum Stator drehbaren Rotor umfasst, wobei der Rotor als ein zweigeteilter Rotor mit mindestens einem ersten Teilrotor und einem zweiten Teilrotor ausgebildet ist, und die Teilrotoren jeweils magnetische Elemente mit unterschiedlichen Polen und mit einer Polanordnung aufweisen, bei welcher die unterschiedlichen Pole der magnetischen Elemente in einer Drehrichtung des Rotors abwechselnd angeordnet sind.

## Beschreibung

Die vorliegende Erfindung betrifft ein Verfahren zum Betreiben einer elektrischen Maschine. Ferner bezieht sich die Erfindung auf eine elektrische Maschine sowie ein System mit einer elektrischen Maschine.

Es ist aus dem Stand der Technik bekannt, dass bei einem Betrieb einer elektrischen Maschine, insbesondere bei permanentmagnetisch erregten elektrischen Maschinen, kritische Zustände auftreten können. Ein solcher kritischer Zustand wird beispielsweise durch eine Störung im oder außerhalb der elektrischen Maschine hervorgerufen. Eine mögliche Störung außerhalb der elektrischen Maschine ist beispielsweise ein Fehler im Umrichter oder eine sonstige Störung im Antriebssystem, die zu einem sicherheitskritischen Zustand führen kann. In einem solchen kritischen Zustand sollte das resultierende Antriebsmoment zulässige geringe Werte einnehmen. Hierfür sollte die Spannung an den Klemmen der elektrischen Maschine unabhängig von der Rotordrehzahl der elektrischen Maschine sehr gering sein und die lebensgefährliche Spannung oberhalb der zulässigen Berührspannung nicht erreichen. Nach Möglichkeit wird im kritischen Zustand die elektrische Maschine nicht aktiv geregelt, und soll weder Leistung aufnehmen noch abgeben, und darf sich insbesondere nicht über einen zulässigen Wert erwärmen.

Dabei ist es bekannt, dass beim Auftreten des kritischen Zustands die minimale Klemmenspannung der elektrischen Maschine dadurch bewirkt wird, dass ein dreiphasiger elektrischer Kurzschluss aktiv bei der elektrischen Maschine eingeleitet wird. Hierzu werden die elektrischen Anschlüsse der elektrischen Maschine beispielsweise über den Umrichter kurzgeschlossen.

Hierbei hat sich allerdings der Nachteil herausgestellt, dass sich ein Kurzschlussstrom und ein Bremsmoment ausbilden. Dabei werden die Wicklung der elektrischen Maschine sowie die Leistungshalbleiter des Umrichters bzw. Wechselrichters in Folge der Kupfer- und Durchlassverluste erwärmt. Zudem muss bei der Auslegung der Komponenten der elektrischen Maschine dieser Betriebszustand berücksichtigt werden, sodass der maximale Kurzschlussstrom begrenzt wird und die Flussverkettung aus dem Rotor und die Hauptinduktivität im Stator aufeinander abgestimmt sind. Dies bringt oft Einschränkungen im Drehmoment und in der Leistung mit sich. Des Weiteren ist es oft notwendig, eine ausreichende Kühlung der Komponenten zu gewährleisten.

Aus der Schrift DE 10 2010 002 401 A1 ist eine elektrische Rotationsmaschine mit einem Stator und einem Rotor bekannt, wobei der Rotor in zumindest einen ersten Rotor und einen zweiten Rotor in einer Richtung seiner Drehwelle zweigeteilt ist, und jeder von dem ersten und zweiten Rotor Feldmagnete mit unterschiedlichen Polaritäten aufweist, die abwechselnd in einer Drehrichtung des Rotors angeordnet sind. Ein Magnetfluss-Steuermechanismus steuert dabei die magnetischen Flüsse durch Variieren von Positionen der Feldmagnete des zweiten Rotors relativ in Bezug auf denjenigen des ersten Rotors.

Der Aufbau, welcher dabei zur stufenlosen Variation der Positionen, das heißt zur mechanischen Feldschwächung, notwendig ist, ist allerdings aufwendig herzustellen und komplex, und bringt das Erfordernis mit sich, eine aufwendige und komplexe Regelung zur Einstellung der Positionen zu implementieren.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine vereinfachte Anordnung vorzuschlagen, durch welche die Klemmenspannung bei Auftreten eines kritischen Zustands zuverlässig minimiert werden kann. Insbesondere soll dabei der Herstellungs- und Kostenaufwand für die elektrische Maschine reduziert werden.

Die voranstehende Aufgabe wird gelöst durch ein Verfahren mit den Merkmalen des Anspruchs 1, durch eine elektrische Maschine mit den Merkmalen des Anspruchs 5 sowie durch ein System mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen elektrische Maschine sowie dem erfindungsgemäßen System, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zum Betreiben einer elektrischen Maschine, welche einen Stator und einen relativ zum Stator drehbaren Rotor umfasst. Hierbei ist insbesondere vorgesehen, dass der Rotor als ein zweigeteilter Rotor mit mindestens einem ersten Teilrotor und einem zweiten Teilrotor ausgebildet ist, und diese (ersten und zweiten) Teilrotoren jeweils (mehrere) magnetische Elemente insbesondere mit unterschiedlichen Polen aufweisen (das heißt, die magnetischen Elemente haben unterschiedliche, zum Beispiel jeweils zwei, Pole, wie beispielsweise magnetischer Nord- und Südpol). Weiter weisen die Teilrotoren jeweils eine Polanordnung auf, bei welcher die unterschiedlichen Pole der magnetischen Elemente (bzw. die magnetischen Elemente entsprechend) in einer Drehrichtung des Rotors abwechselnd angeordnet sind. Mit anderen Worten sind insbesondere die magnetischen Elemente des jeweiligen Teilrotors derart angeordnet, dass bei der Polanordnung die (beispielsweise beiden) unterschiedlichen Pole der magnetischen Elemente, insbesondere Nordpol und Südpol, sich abwechseln, und/oder bevorzugt entlang des Umfangs des ersten und/oder zweiten Teilrotors abwechselnd angeordnet sind. Besonders bevorzugt ist dabei jeder Nordpol entlang des Umfangs des Rotors benachbart zu einem Südpol angeordnet und umgekehrt. Unter den unterschiedlichen Polen werden daher bevorzugt Süd- und Nordpol der magnetischen Elemente verstanden, wobei insbesondere jedes magnetische Element sowohl Nordpol- als auch Südpol aufweist, und zur Erzielung der Polanordnung und/oder der abwechselnden Anordnung der Pole lediglich die Ausrichtung der magnetischen Element sich unterscheidet und abwechselt. Bevorzugt sind dabei an jedem der (ersten und zweiten) Teilrotoren mindestens 5 und/oder mindestens 10 und/oder mindestens 15 magnetische Elemente, insbesondere in gleicher Weise, vorgesehen, und/oder es ist die Anzahl der magnetischen Elemente des ersten Teilrotors identisch mit der Anzahl der magnetischen Elemente des zweiten Teilrotors. Vorzugsweise entspricht die Anzahl der magnetischen Elemente (für jeden der Teilrotoren) ausschließlich einer geraden Zahl. Bevorzugt weisen die Pole des zweiten Teilrotors zu den Polen des ersten Teilrotors in der Normalposition (regulärer Betriebszustand) eine Nord-Nord und Süd-Süd Ausrichtung und in der Sicherheitsposition eine Nord-Süd und Süd-Nord Ausrichtung auf.

Es sind vorzugsweise die nachfolgenden Schritte vorgesehen, welche bevorzugt nacheinander oder in beliebiger Reihenfolge ausgeführt werden:
- Überwachen, bevorzugt eines relevanten Zustands, besonders bevorzugt eines für den Betrieb der elektrischen Maschine und/oder für einen Betrieb eines Antriebs, insbesondere in einem Fahrzeug und/oder eines Fahrzeuges, relevanten Zustands, durch eine Überwachungsvorrichtung. Insbesondere erfolgt die Überwachung in einem normalen Betriebszustand der elektrischen Maschine (das heißt zum Beispiel, in einem derartigen Betriebszustand, in welchem die elektrische Maschine normal und/oder fehlerfrei und/oder unkritisch betrieben wird, z. B. zum Antreiben und/oder als Motor oder als Generator und insbesondere auch des gesamten Antriebsstranges), um einen kritischen Zustand (das heißt zum Beispiel ein derartiger Zustand, in welchem die elektrische Maschine oder der gesamte Antrieb fehlerhaft und/oder kritisch betrieben wird) zu detektieren,
- Durchführen einer (zumindest teilweisen) mechanischen Sicherheitsumschaltung, wenn der kritische Zustand durch die Überwachungsvorrichtung detektiert wird, sodass die elektrische Maschine von einem normalen Betriebszustand in einen sicheren Betriebszustand (das heißt zum Beispiel ein derartiger Betriebszustand, in welchem ein magnetischer Kurzschluss und/oder Leerlauf und/oder maximale Feldschwächung und/oder minimale Klemmenspannung der elektrischen Maschine vorliegt) gebracht wird, wobei die mechanische Sicherheitsumschaltung durch eine Bewegung, insbesondere eine Drehung, des zweiten Teilrotors relativ zum ersten Teilrotor von einer Normalposition in eine Sicherheitsposition, insbesondere um den Winkel einer Polbreite der Pole, insbesondere durch eine Mechanik, erfolgt.

Hierdurch wird der Vorteil erzielt, dass in einfacher und zuverlässiger Weise die elektrische Maschine in einen Betriebszustand geführt werden kann, bei welcher die Klemmenspannung, das heißt insbesondere die Ständerstrangspannung bzw. Spannung der Statorwicklungen, minimiert werden kann. Insbesondere kann dies unabhängig von der Funktion eines Wechselrichters und/oder Umrichters erfolgen, welcher zum Betrieb der elektrischen Maschine genutzt wird. Des Weiteren bietet das erfindungsgemäße Verfahren insbesondere den Vorteil, dass die magnetische Flussverkettung aus dem Rotor und der Hauptinduktivität im Stator entkoppelt wird. Der relevante Zustand ist dabei insbesondere ein Zustand, welcher den Betrieb der elektrischen Maschine beeinflusst und/oder in welchem der Betrieb der elektrischen Maschine die Umgebung der elektrischen Maschine beeinflusst. Der kritische Zustand ist dabei vorzugsweise ein bestimmter relevanter Zustand, welcher den Betrieb der elektrischen Maschine negativ beeinflusst und/oder in welchem der Betrieb der elektrischen Maschine die Umgebung der elektrischen Maschine nachteilhaft beeinflusst. Die Bewegung des zweiten Teilrotors zur Durchführung der mechanischen Sicherheitsumschaltung ist beispielsweise eine Drehung um eine Drehachse des ersten und/oder zweiten Teilrotors und/oder eine translatorische Bewegung des ersten und/oder zweiten Teilrotors, insbesondere derart, dass ein räumlicher Abstand zwischen gleichartigen Polen des ersten und zweiten Teilrotor sich verändert / erhöht. Diese Bewegung ist insbesondere als eine "Relativbewegung" zu verstehen. Selbstverständlich wird daher unter der Bewegung des zweiten Teilrotors auch insbesondere eine beliebige andere Bewegung, so auch beispielsweise eine gleichzeitige Bewegung sowohl des ersten und des zweiten Teilrotors oder auch nur des ersten Teilrotors, verstanden, welche geeignet ist, um die Auswirkung (zum Beispiel einer minimalen Klemmenspannung) dieser Bewegung des zweiten Teilrotors relativ zum ersten Teilrotor in Bezug auf das Magnetfeld zu bewirken. Bevorzugt wird gemäß dem erfindungsgemäßen Verfahren nicht im normalen Betriebszustand magnetisch feldgeschwächt sondern es soll unabhängig von der Rotordrehzahl jederzeit (aus dem normalen Betriebszustand heraus) der Zustand der minimalen Klemmenspannung durch die Sicherheitsumschaltung erzielt werden können.

Vorteilhafterweise kann es vorgesehen sein, dass die elektrische Maschine als eine rotierende elektrische Maschine und/oder als eine Synchronmaschine und/oder als ein Elektromotor und/oder Generator eines Antriebs, insbesondere eines Antriebs in einem Fahrzeug, insbesondere Kraftfahrzeug und/oder Elektrofahrzeug und/oder Hybridfahrzeug und/oder Brennstoffzellenfahrzeug, und/oder als eine Elektro-Traktionsmaschine für ein Hybrid- und/oder Elektro- und/oder Brennstoffzellenfahrzeug und/oder als eine permanentmagnetisch erregte Elektromaschine ausgeführt ist. Insbesondere ist die elektrische Maschine als eine derart elektrische Maschine ausgeführt, bei welcher bei einem Auftreten eines kritischen Zustands eine Herbeiführung einer minimalen Klemmenspannung erforderlich ist. Dabei macht vorzugsweise das Auftreten des kritischen Zustands (das heißt insbesondere das Detektieren des kritischen Zustands) notwendig, dass die elektrische Maschine aus ihrem normalen Betriebszustand in den sicheren Betriebszustand überführt wird. Der sichere Betriebszustand stellt somit einen Ausnahme-Betriebszustand dar, wobei die elektrische Maschine vorzugsweise nur dann in den sicheren Betriebszustand gebracht wird, wenn Störungen und/oder Fehler innerhalb und/oder außerhalb der elektrischen Maschine auftreten, welche insbesondere die elektrische Maschine betreffen und/oder auf Antriebsebene sicherheitskritische Zustände bzw. unzulässige Drehmomentenwerte hervorrufen könnten. Der sichere Betriebszustand unterscheidet sich vorzugsweise vom normalen Betriebszustand dadurch, dass im sicheren Betriebszustand die Klemmenspannung stets und/oder dauerhaft minimiert wird. Im Rahmen der Erfindung wird unter einer Minimierung der Klemmenspannung insbesondere verstanden, dass eine minimale Klemmenspannung der elektrischen Maschine herbeigeführt wird, bei welcher die Klemmenspannung die Werte oberhalb der zulässigen Berührspannung nicht erreicht. Insbesondere erfolgt dabei im sicheren Betriebszustand die Minimierung der Klemmenspannung unabhängig von der Rotordrehzahl und/oder bei einer Rotordrehzahl ungleich 0 bzw. größer als 0 (Umdrehungen pro Minute). Entsprechend ist bevorzugt der sichere Betriebszustand ein Zustand, bei welchem nahezu kein Leistungsbedarf und/oder nahezu keine Leistungsabgabe der elektrischen Maschine besteht und/oder keine oder nur geringe Wärmeverluste in der Wicklung der elektrischen Maschine auftreten. Dies hat den Vorteil, dass keine oder nur eine reduzierte Kühlung in diesem sicheren Betriebszustand notwendig ist.

Vorzugsweise kann es vorgesehen sein, dass der erste Teilrotor fest mit einer Rotorwelle des Rotors verbunden ist. Alternativ oder zusätzlich ist es denkbar, dass sowohl in einem normalen Betriebszustand als auch in dem sicheren Betriebszustand und/oder in der Normalposition und/oder in der Sicherheitsposition ein Drehmoment von der Rotorwelle an den ersten und/oder zweiten Teilrotor übertragen wird, wobei vorzugsweise die Drehzahl des Rotors dabei deutlich größer als 0 (Umdrehungen pro Minute) ist. Dies ermöglicht einen sicheren und zuverlässigen Betrieb der elektrischen Maschine.

Nach einer weiteren Möglichkeit kann vorgesehen sein, dass im normalen Betriebszustand eine, bevorzugt (beispielsweise rein) elektrische, Feldschwächung erfolgt, insbesondere durch eine Ansteuerung durch einen elektrischen Umrichter, und (insbesondere unabhängig davon, ob eine Feldschwächung erfolgt) durch die Sicherheitsumschaltung sprunghaft ein magnetischer Kurzschluss derart bewirkt wird, dass im sicheren Betriebszustand eine Klemmenspannung der elektrischen Maschine minimiert wird. Bevorzugt erfolgt im normlen Betriebszustand immer und/oder ausschließlich eine elektrische Feldschwächung, wobei z. B. nur in Ausnahmesituationen (sicherer Betriebszustand) eine minimale Klemmenspannung durch die Sicherheitsumschaltung bewirkt wird. Insbesondere ist dabei die Klemmenspannung die Statorspannung, das heißt die Spannung an den Statorwicklungen. Vorzugsweise wird durch den magnetisches Kurzschluss die Erregung im magnetischen Feld der elektrischen Maschine (Elektromaschine) sprunghaft reduziert. Unter einer Minimierung der Klemmenspannung wird bevorzugt verstanden, dass eine minimale Klemmenspannung bewirkt wird, welche die Werte oberhalb der zulässigen Berührspannung nicht erreicht. Besonders bevorzugt ist der elektrische Umrichter als ein Frequenzumrichter und/oder dergleichen ausgeführt. Alternativ oder zusätzlich kann es vorgesehen sein, dass ein elektrischer Wechselrichter vorgesehen ist und/oder dass im normalen Betriebszustand (immer) die Feldschwächung (nur) durch den elektrischen Wechselrichter und/oder dergleichen erfolgt. Insbesondere wird die Bewegung des zweiten Teilrotors (im normalen Betriebszustand und/oder im normalen Betrieb) niemals zur Feldschwächung eingesetzt. Der Umrichter und/oder der Wechselrichter ist dabei insbesondere mit der elektrischen Maschine elektrisch verbunden, um die Drehzahl des Rotors zu verändern und/oder zu steuern. Weiter kann es möglich sein, dass im sicheren Betriebszustand die stationären Kräfte auf den Rotor minimiert und/oder die Leistungselektronik nicht angesteuert und/oder die induzierte Spannung der elektrischen Maschine minimiert wird, sodass insbesondere im Wesentlichen kein Strom durch die Wicklungen der elektrischen Maschine, insbesondere des Stators, fließen kann. Dies ermöglicht eine Vermeidung von Beschädigungen der elektrischen Maschine auch im kritischen Zustand. Weiter wird durch die Nutzung des magnetischen Kurzschlusses der Vorteil erzielt, dass auf ein elektrisches Kurzschließen der Anschlüsse der elektrischen Maschine über den Wechselrichter verzichtet (im sicheren Betriebszustand) werden kann.

Gemäß einer vorteilhaften Weiterbildung der Erfindung kann vorgesehen sein, dass zur Durchführung der Sicherheitsumschaltung ein mechanisches Umschalten einer Mechanik erfolgt, wobei durch die Mechanik ein Wechsel des zweiten Teilrotors von der Normalposition in die Sicherheitsposition und/oder umgekehrt bewirkt wird. Die Mechanik ist vorzugsweise für ein sprunghaftes Umschalten zwischen mindestens zwei Zuständen ausgeführt, beispielsweise bistabil ausgeführt. Die einfache mechanische Ausführung der Mechanik hat daher den Vorteil, dass die elektrische Maschine, insbesondere die Funktionalität zur Sicherheitsumschaltung, mechanisch einfach und kostengünstig hergestellt werden kann. Die Mechanik wird beispielsweise elektrisch (insbesondere durch die Überwachungsvorrichtung) angesteuert und/oder umgeschaltet, und ist hierzu zum Beispiel mit einem elektrisch ansteuerbaren Schalter und/oder Magnetschalter und/oder Motor und/oder dergleichen verbunden. Der Schalter ist beispielsweise derart ausgeführt, dass ausschließlich zwei Schaltzustände einnehmbar sind. Die Mechanik weist bevorzugt ausschließlich zwei Schaltzustände auf, welche ein Umschalten in jeweils unterschiedliche Positionen des zweiten Teilrotors, vorzugsweise einen Wechsel zwischen der Normalposition und der Sicherheitsposition, ermöglichen. Insbesondere ist es vorgesehen, dass durch die Mechanik die Bewegbarkeit (bzw. Drehbarkeit) des zweiten Teilrotors relativ zum ersten Teilrotor und/oder relativ zur Rotorwelle (im normalen Betriebszustand) gesperrt wird und/oder sperrbar ist und/oder (im sicheren Betriebszustand durch die Sicherheitsumschaltung) freigegeben wird und/oder freigebbar ist.

Bevorzugt kann im Rahmen der Erfindung vorgesehen sein, dass der zweite Teilrotor relativ zum ersten Teilrotor (zum Beispiel stufenweise) ausschließlich in definierte Positionen bewegt wird, vorzugsweise ausschließlich Positionen, welche (das heißt dessen Abstände) sich um eine oder das Vielfache einer ganzen Polbreite voneinander unterscheiden, wobei bevorzugt in der Sicherheitsposition Pole von ersten magnetischen Elementen des ersten Teilrotors von gleichartigen Polen von zweiten magnetischen Elementen des zweiten Teilrotors versetzt sind (das heißt insbesondere eine Nord-Süd bzw. Süd-Nord Anordnung vorliegt). Die Gleichartigkeit bezieht sich insbesondere darauf, ob die Pole magnetische Süd- oder Nordpole sind. Die Polbreite entspricht vorzugsweise einer Stufe. Hierdurch wird der Vorteil erzielt, dass auf eine komplizierte und aufwendige Steuerung und/oder Regelung zur Positionierung des zweiten Teilrotors, beispielsweise zur magnetischen Feldschwächung, verzichtet werden kann. Insbesondere ist die Drehbarkeit und/oder Bewegbarkeit und/oder Ansteuerung des zweiten Teilrotors ausschließlich dazu ausgeführt, eine Sicherheitsumschaltung (und damit keine magnetische Feldschwächung) durchzuführen. Bevorzugt unterscheidet sich die Normalposition von der Sicherheitsposition dadurch, dass sich in der Normalposition gleiche Pole des ersten Teilrotors und des zweiten Teilrotors gegenüberstehen (und damit das Magnetfeld verstärken und/oder ein reguläres Magnetfeld und/oder eine reguläre Klemmenspannung ausbilden) und in der Sicherheitsposition Pole unterschiedlicher Polarität gegenüberstehen bzw. Pole gleicher Polarität des ersten Teilrotors und des zweiten Teilrotors voneinander versetzt sind (und damit eine minimale Klemmenspannung erzielen). Hierzu bewegt sich der zweite Teilrotor beispielsweise gegenüber dem ersten Teilrotor um exakt oder im Wesentlichen eine Polbreite, sodass die Drehung des zweiten Teilrotors nicht als frei bzw. stufenlos bzw.analog anzusehen ist, sondern vielmehr als definiert bzw. bistabil.

Ebenfalls Gegenstand der Erfindung ist eine elektrische Maschine, mit einem Stator und einem relativ zum Stator drehbaren Rotor, das heißt insbesondere, dass der Rotor gegenüber dem Stator drehbar ist, und vorzugsweise innerhalb des Stators (im Stator-Innerem) angeordnet ist. Hierbei ist insbesondere vorgesehen, dass der Rotor als ein zweigeteilter Rotor mit mindestens einem ersten Teilrotor und einem zweiten Teilrotor ausgebildet ist, und wobei die Teilrotoren jeweils magnetische Elemente umfassen, wobei die magnetischen Elemente jeweils unterschiedliche Pole aufweisen, und (die Teilrotoren jeweils) eine Polanordnung aufweisen, bei welcher die unterschiedlichen Pole der magnetischen Elemente in einer Drehrichtung (insbesondere um eine Drehachse) des Rotors abwechselnd angeordnet sind, wobei insbesondere der erste Teilrotor fest mit einer Rotorwelle des Rotors verbunden ist, sodass ein Drehmoment von der Rotorwelle an den ersten Teilrotor übertragbar ist, und wobei vorzugsweise der zweite Teilrotor (insbesondere relativ zur Rotorwelle und) relativ zum ersten Teilrotor bewegbar, insbesondere drehbar, gelagert ist, wobei
eine Mechanik zur Bewegung des zweiten Teilrotors vorgesehen ist, und durch die Mechanik der zweite Teilrotor , insbesondere um den Winkel einer Polbreite der Pole, von einer Normalposition in eine Sicherheitsposition bewegbar, insbesondere drehbar, ist, um eine mechanische Sicherheitsumschaltung durchzuführen, sodass die elektrische Maschine von einem normalen Betriebszustand in einen sicheren Betriebszustand bringbar ist. Damit bringt die erfindungsgemäße elektrische Maschine die gleichen Vorteile mit sich, wie sie ausführlich mit Bezug auf ein erfindungsgemäßes Verfahren beschrieben sind. Zudem kann die elektrische Maschine geeignet sein, gemäß einem erfindungsgemäßen Verfahren betreibbar zu sein.

Beispielsweise sind die Teilrotoren jeweils auch relativ zum Stator drehbar, insbesondere proportional zur Drehung der Rotorwelle. Bevorzugt wird dabei das Drehmoment von der Rotorwelle an beide Teilrotoren, zum Beispiel in gleicher Weise, übertragen. Der Rotor ist insbesondere in Richtung seiner Drehachse (und/oder Rotorwelle) zweigeteilt. Selbstverständlich kann es alternativ oder zusätzlich auch vorgesehen sein, dass ein axiales Herausfahren des Rotors (als einteiliger Rotor) und/oder des ersten und/oder zweiten Teilrotors aus dem Stator-Inneren für einen Wechsel von der Normalposition in die Sicherheitsposition durchgeführt wird. Die Polbreite ist insbesondere abhängig von den Polen der magnetischen Elemente, und entspricht beispielsweise einer mechanischen Umdrehung (360° Grad mech.) dividiert durch die Polzahl. Vorzugsweise sind die magnetischen Elemente als Permanentmagnete und/oder Stabmagnete und/oder Wicklungen und/oder dergleichen ausgeführt, welche eine Polarität und damit zwei unterschiedliche Pole aufweisen. Besonders bevorzugt sind die magnetischen Elemente derart am ersten und/oder zweiten Teilrotor in einer Polanordnung angeordnet, dass die Pole unterschiedlicher Art (bzw. unterschiedlicher Polarität) abwechselnd in der Drehrichtung des Rotors angeordnet sind. Entsprechend wechseln sich Nordpol und Südpol der magnetischen Elemente in der Drehrichtung des Rotors ab.

Vorzugsweise sind die Teilrotoren in der Normalposition derart zueinander angeordnet, dass der Südpol der magnetischen Elemente des ersten Teilrotors gegenüber dem Südpol der magnetischen Elemente des zweiten Teilrotors angeordnet und der Nordpol der magnetischen Elemente des ersten Teilrotors gegenüber dem Nordpol der magnetischen Elemente des zweiten Teilrotors angeordnet ist. Bei der Sicherheitsumschaltung findet insbesondere (für den Wechsel in den sicheren Betriebszustand) eine derartige (Relativ-)Bewegung des zweiten Teilrotors statt, dass sich die Nordpole der magnetischen Elemente des zweiten Teilrotors von den Nordpolen der magnetischen Elemente des ersten Teilrotors entfernen und nunmehr die Nordpole der magnetischen Elemente des zweiten Teilrotors versetzt zu den Nordpolen der magnetischen Elemente des ersten Teilrotors angeordnet und/oder gegenüber den (magnetischen) Südpolen der magnetischen Elemente des ersten Teilrotors positioniert sind. Entsprechendes gilt für die Südpole der magnetischen Elemente des ersten und zweiten Teilrotors. Hierdurch kann zuverlässig ein magnetischer Kurzschluss bewirkt werden, um in den sicheren Betriebszustand zu gelangen.

Ferner kann es im Rahmen der Erfindung vorgesehen sein, dass die Normalposition und die Sicherheitsposition jeweils eine stabile Lage des zweiten Teilrotors bilden, sodass insbesondere der zweite Teilrotor relativ zum ersten Teilrotor ausschließlich bistabil und/oder stufenweise drehbar ausgeführt ist. Somit kann vorteilhafterweise auf eine aufwendige Mechanik zur Bewegung des zweiten Teilrotors in verschiedene stufenlose Positionen verzichtet werden, da ausschließlich eine Sicherheitsumschaltung durchgeführt werden muss. Bevorzugt sind dabei die möglichen Positionen des zweiten Teilrotors nicht stufenlos, sondern ausschließlich in Stufen einstellbar. Insbesondere ist es dabei denkbar, dass ausschließlich entweder die Normalposition oder die Sicherheitsposition durch den zweiten Teilrotor eingenommen werden kann, sodass die Drehung des zweiten Teilrotors entsprechend nicht frei bzw. nicht analog, sondern unfrei erfolgt, das heißt, dass keine Zwischenpositionen stabil einnehmbar sind und/oder keine graduelle mechanische Feldschwächung durchführbar ist.

Ein weiterer Vorteil im Rahmen der Erfindung ist erzielbar, wenn die Mechanik mindestens ein Federelement umfasst, welches durch eine Entriegelung und/oder ein Umschalten der Mechanik derart mit dem zweiten Teilrotor in Wirkverbindung bringbar ist, dass durch eine Kraftübertragung von dem Federelement auf den zweiten Teilrotor die Sicherheitsumschaltung durchführbar ist. Das Federelement kann dabei beispielsweise als vorgespannte Feder ausgeführt sein, wobei die Freigabe der Feder zur Durchführung der Sicherheitsumschaltung durchgeführt wird. Dies ermöglicht eine mechanisch einfache und zuverlässige Sicherheitsumschaltung.

Ferner kann im Rahmen der Erfindung vorgesehen sein, dass die Mechanik bistabil schaltbar ausgeführt ist, wobei die Mechanik vorzugsweise eine vorgespannte Feder als Federelement aufweist, welche bei einem Umschalten zur Durchführung der Sicherheitsumschaltung freigebbar ist. Vorzugsweise kann dabei die Mechanik als Sicherungsvorrichtung ausgeführt sein, und insbesondere wird bei einer Entriegelung eine vorgespannte Feder (mechanisch) freigeben, welche dann eine Drehung des zweiten Teilrotors bewirkt (mithilfe der Federkraft). Insbesondere wird durch die Mechanik eine lineare Bewegung in eine Drehbewegung des zweiten Teilrotors umgewandelt. Dies ermöglicht eine zuverlässige Durchführung der Sicherheitsumschaltung.

Ebenfalls Gegenstand der Erfindung ist ein System zur Durchführung einer mechanischen Sicherheitsumschaltung, zumindest aufweisend:
- eine elektrische Maschine, insbesondere eine erfindungsgemäße elektrische Maschine,
- eine elektrische Überwachungsvorrichtung.

Hierbei ist insbesondere vorgesehen, dass die Überwachungsvorrichtung dazu ausgeführt ist, einen für die elektrische Maschine kritischen Zustand, welcher innerhalb und/oder außerhalb der elektrischen Maschine auftreten kann, zu detektieren, und die Sicherheitsumschaltung an der elektrischen Maschine zu initiieren und/oder aktiv durchzuführen. Damit bringt das erfindungsgemäße System die gleichen Vorteile mit sich, wie sie ausführlich mit Bezug auf ein erfindungsgemäßes Verfahren und/oder eine erfindungsgemäße elektrische Maschine beschrieben sind. Zudem kann das System geeignet sein, gemäß einem erfindungsgemäßen Verfahren betreibbar zu sein. Vorzugsweise kann dabei die Überwachungsvorrichtung vollständig oder teilweise in der elektrischen Maschine integriert sein und/oder Bestandteil der elektrischen Maschine sein. Bevorzugt ist die Überwachungsvorrichtung mechanisch und/oder elektrisch mit der Mechanik verbunden, um die Mechanik zu entriegeln und/oder anzusteuern. Besonders bevorzugt umfasst die Überwachungsvorrichtung eine Sensorik, um die Position des zweiten Teilrotors zu detektieren. Besonders bevorzugt führt die Überwachungsvorrichtung eine Überwachung eines Hochvoltsystems und/oder eines elektrischen Umrichters und/oder einer übergeordneten Instanz, vorzugsweise in einem Fahrzeug, durch.

Es kann optional möglich sein, dass die elektrische Überwachungsvorrichtung eine Position des zweiten Teilrotor erfasst, sodass durch eine Detektion der Überwachungsvorrichtung eine Normalposition von einer Sicherheitsposition unterscheidbar ist. Alternativ oder zusätzlich umfasst die Sicherheitsumschaltung eine Drehung des zweiten Teilrotors, um den Winkel einer Polbreite der Pole der magnetischen Elemente des zweiten Teilrotors von der Normalposition in die Sicherheitsposition, sodass die elektrische Maschine von einem normalen Betriebszustand in einen sicheren Betriebszustand gebracht wird. Bevorzugt kann dabei die Drehung durch die Überwachungsvorrichtung, zum Beispiel der Drehwinkel, bestimmt werden. Auf diese Weise kann zuverlässig detektiert werden, wenn sich die elektrische Maschine im sicheren Betriebszustand befindet.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Draufsicht auf Teile einer erfindungsgemäßen elektrischen Maschine, insbesondere auf magnetische Elemente der elektrischen Maschine, in einer Normalposition;
- Fig. 2: eine weitere schematische Draufsicht auf eine erfindungsgemäße elektrische Maschine, insbesondere auf magnetische Elemente der elektrischen Maschine, in einer Sicherheitsposition;
- Fig. 3: ein schematischer Querschnitt durch Teile einer elektrische Maschine in einer Normalposition;
- Fig. 4: ein weiterer schematischer Querschnitt durch Teile einer elektrische Maschine in einer Sicherheitsposition;
- Fig. 5: eine schematische Darstellung zur Visualisierung eines erfindungsgemäßen Verfahrens.

In den nachfolgenden Fign. werden für die gleichen technischen Merkmale auch von unterschiedlichen Ausführungsbeispielen die identischen Bezugszeichen verwendet.

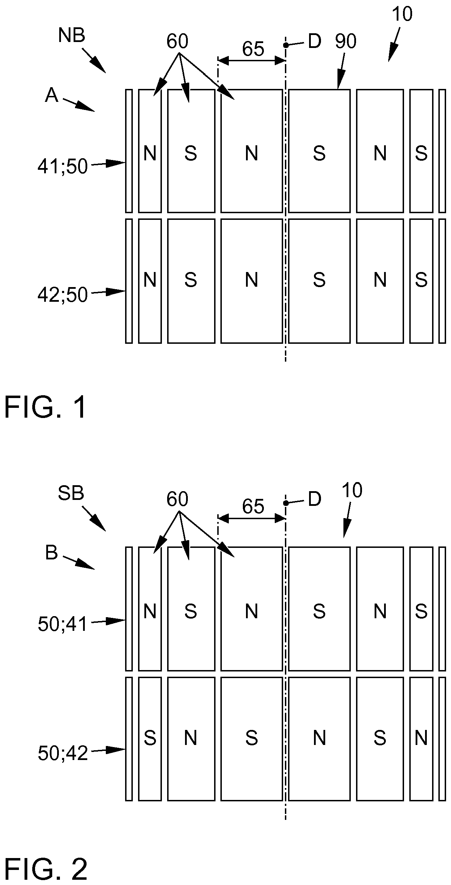

In Fig. 1 ist schematisch eine Draufsicht auf mehrere magnetische Elemente 90 einer erfindungsgemäßen elektrischen Maschine 10 gezeigt. Weiter ist eine Drehachse D der elektrischen Maschine 10 dargestellt. Die erfindungsgemäße elektrische Maschine 10 umfasst einen zweigeteilten Rotor 30, welcher entsprechend mindestens zwei Teilrotoren 40 aufweist. Ein erster Teilrotor 41 und ein zweiter Teilrotor 42 stehen sich dabei gegenüber und/oder sind benachbart in einer Entfernung angeordnet, welche eine magnetische Wirkverbindung ermöglicht. Es sind hierbei in Fig. 1 die Polanordnungen 50 der Pole 60 der magnetischen Elemente 90 des ersten Teilrotors 41 und des zweiten Teilrotors 42 in einer Normalposition A gezeigt. Zudem ist die Polbreite 65 (nur rein schematisch - aufgrund der perspektivischen Darstellung der magnetischen Elemente 90 in der Draufsicht in den Fign. 1 und 2) gekennzeichnet, welche vorzugsweise sowohl für (sämtliche) Nordpole N als auch für (sämtliche) Südpole S identisch ist. Da sich hierbei gleichartige Pole 60 des ersten Teilrotors 41 und des zweiten Teilrotors 42 gegenüberstehen, sodass ein für den Betrieb der elektrischen Maschine 10 "normales" Magnetfeld bewirkt wird, befindet sich die elektrische Maschine 10 im normalen Betriebszustand NB.

In Fig. 2 ist gezeigt, dass sich durch eine Drehung des zweiten Teilrotors 42 eine Anordnung der Pole 60 erzielen lässt, in welcher gleichartige Pole 60 des ersten Teilrotors 41 und des zweiten Teilrotors 42 versetzt voneinander angeordnet sind. Entsprechend steht hierbei in der Sicherheitsposition B des zweiten Teilrotors 42 ein Nordpol N des ersten Teilrotors 41 einem Südpol S des zweiten Teilrotors 42 gegenüber. Die elektrische Maschine 10 nimmt somit den sicheren Betriebszustand SB ein, in welchem beispielsweise eine minimale Klemmenspannung und/oder ein magnetischer Kurzschluss aufgrund der Polstellung bewirkt wird. Der Wechsel von der Normalposition A in die Sicherheitsposition B erfolgt dabei zur Durchführung einer Sicherheitsumschaltung SU.

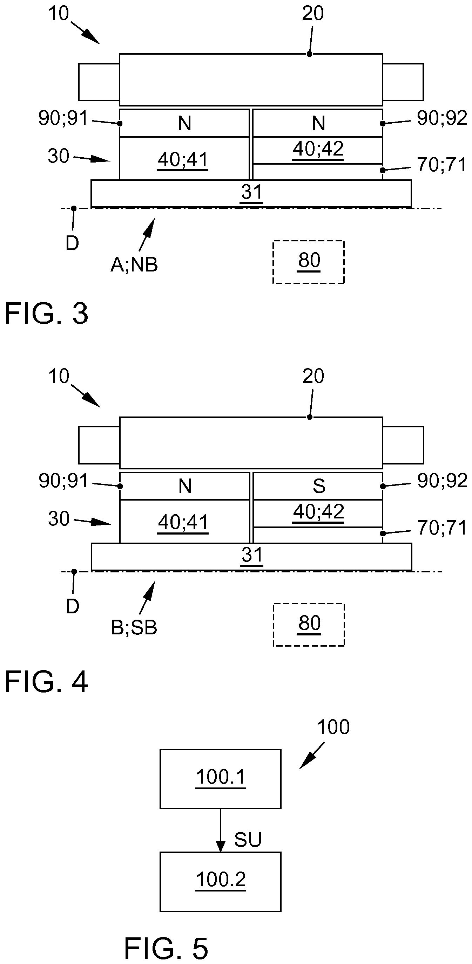

Ein schematischer Querschnitt durch Teile der elektrischen Maschine 10 ist in den Fign. 3 und 4 gezeigt, wobei eine Überwachungsvorrichtung 80 zumindest teilweise außerhalb der elektrischen Maschine 10 schematisch dargestellt ist. Dabei ist erkennbar, dass die Teilrotoren 40 mit geringem räumlichen Abstand an einen Stator 20 der erfindungsgemäßen elektrischen Maschine 10 angrenzen, sodass sich zwischen dem Stator 20 und den Teilrotoren 40 (insbesondere den magnetischen Elementen 90 der jeweiligen Teilrotoren 40) lediglich ein Luftspalt befindet. Weiter sind erste magnetische Elemente 91 des ersten Teilrotors 41 und zweite magnetische Elemente 92 des zweiten Teilrotors 42 gezeigt. Der erste Teilrotor 41 ist dabei unmittelbar und/oder fest mit einer Rotorwelle 31 verbunden, und der zweite Teilrotor 42 indirekt über eine Mechanik 70 mit der Rotorwelle 31 verbunden. In beiden Fällen ist eine Übertragung eines Drehmoments von der Rotorwelle 31 an die jeweiligen Teilrotoren 40 möglich. Insbesondere verbindet die Mechanik 70 die Rotorwelle 31 stets (sowohl im normalen als auch im sicheren Betriebszustand) drehfest mit dem zweiten Teilrotor 42, wohingegen bevorzugt der erste Teilrotor 41 zum Beispiel unmittelbar drehfest mit der Rotorwelle 31 verbunden ist. Die Mechanik 70 umfasst beispielsweise ein Federelement 71, um eine Bewegung des zweiten Teilrotors 42 von der Normalposition A (Fig. 3) in die Sicherheitsposition B (Fig.4) zu bewirken.

In Fig. 5 ist schematisch ein erfindungsgemäßes Verfahren 100 visualisiert. Gemäß einem ersten Verfahrensschritt 100.1 befindet sich dabei eine elektrische Maschine 10 in einem normalen Betriebszustand NB, wobei ein für den Betrieb der elektrischen Maschine 10 relevanter Zustand durch eine Überwachungsvorrichtung 80 überwacht wird. Wenn hierbei ein kritischer Zustand durch die Überwachungsvorrichtung 80 detektiert wird, erfolgt durch eine Sicherheitsumschaltung SU eine Umschaltung in einen sicheren Betriebszustand SB gemäß einem zweiten Verfahrensschritt 100.2.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Elektrische Maschine

- 20: Stator

- 30: Rotor
- 31: Rotorwelle

- 40: Teilrotor
- 41: erster Teilrotor
- 42: zweiter Teilrotor

- 50: Polanordnung

- 60: Pole
- 65: Polbreite

- 70: Mechanik
- 71: Federelement

- 80: Überwachungsvorrichtung

- 90: magnetisches Element
- 91: erstes magnetisches Element
- 92: zweites magnetisches Element

- 100: Verfahren
- 100.1: erster Verfahrensschritt
- 100.2: zweiter Verfahrensschritt

- A: Normalposition
- B: Sicherheitsposition

- D: Drehachse

- N: Positiver bzw. Nordpol
- S: Negativer bzw. Südpol

- NB: normaler Betriebszustand
- SB: sicherer Betriebszustand

- SU: Sicherheitsumschaltung

## Patentansprüche

1. Verfahren (100) zum Betreiben einer elektrischen Maschine (10), welche einen Stator (20) und einen relativ zum Stator (20) drehbaren Rotor (30) umfasst, wobei der Rotor (30) als ein zweigeteilter Rotor (30) mit mindestens einem ersten Teilrotor (41) und einem zweiten Teilrotor (42) ausgebildet ist, und
die Teilrotoren (40) jeweils magnetische Elemente (90) mit unterschiedlichen Polen (60) und mit einer Polanordnung (50) aufweisen, bei welcher die unterschiedlichen Pole (60) der magnetischen Elemente (90) in einer Drehrichtung des Rotors (30) abwechselnd angeordnet sind,
**gekennzeichnet durch** die nachfolgenden Schritte:
- Überwachen **durch** eine Überwachungsvorrichtung (80), um einen kritischen Zustand zu detektieren,
- Durchführen einer mechanischen Sicherheitsumschaltung (SU), wenn der kritische Zustand **durch** die Überwachungsvorrichtung (80) detektiert wird, sodass die elektrische Maschine (10) von einem normalen Betriebszustand (NB) in einen sicheren Betriebszustand (SB) gebracht wird, wobei
die mechanische Sicherheitsumschaltung (SU) **durch** eine Bewegung des zweiten Teilrotors (42) relativ zum ersten Teilrotor (41) von einer Normalposition (A) in eine Sicherheitsposition (B) erfolgt.

2. Verfahren (100) nach Anspruch 1,
**dadurch gekennzeichnet,**
**dass** durch die Sicherheitsumschaltung (SU) sprunghaft ein magnetischer Kurzschluss derart bewirkt wird, dass im sicheren Betriebszustand (SB) eine Klemmenspannung der elektrischen Maschine (10) minimiert wird.

3. Verfahren (100) nach Anspruch 1 oder 2,
**dadurch gekennzeichnet,**
**dass** zur Durchführung der Sicherheitsumschaltung (SU) ein mechanisches Umschalten einer Mechanik (70) erfolgt, wobei durch die Mechanik (70) ein Wechsel des zweiten Teilrotors (42) von der Normalposition (A) in die Sicherheitsposition (B) und/oder umgekehrt bewirkt wird.

4. Verfahren (100) nach einem der vorhergehenden Ansprüche,
**dadurch gekennzeichnet,**
**dass** der zweite Teilrotor (42) relativ zum ersten Teilrotor (41) ausschließlich in definierte Positionen bewegt wird, vorzugsweise ausschließlich Positionen, welche sich um eine oder das Vielfache einer ganzen Polbreite (65) voneinander unterscheiden, wobei bevorzugt in der Sicherheitsposition (B) Pole (60) von ersten magnetischen Elementen (91) des ersten Teilrotors (41) von gleichartigen Polen (60) von zweiten magnetischen Elementen (92) des zweiten Teilrotors (42) versetzt sind.

5. Elektrische Maschine (10), mit einem Stator (20) und einem relativ zum Stator (20) drehbaren Rotor (30), wobei
der Rotor (30) als ein zweigeteilter Rotor (30) mit mindestens einem ersten Teilrotor (41) und einem zweiten Teilrotor (42) ausgebildet ist, und
die Teilrotoren (40) jeweils magnetische Elemente (90) mit unterschiedlichen Polen (60) und mit einer Polanordnung (50) aufweisen, bei welcher die unterschiedlichen Pole (60) der magnetischen Elemente (90) in einer Drehrichtung des Rotors (30) abwechselnd angeordnet sind, wobei
der zweite Teilrotor (42) relativ zum ersten Teilrotor (41) bewegbar gelagert ist, wobei eine Mechanik (70) zur Bewegung des zweiten Teilrotors (42) vorgesehen ist, und durch die Mechanik (70) der zweite Teilrotor (42) von einer Normalposition (A) in eine Sicherheitsposition (B) bewegbar ist, um eine mechanische Sicherheitsumschaltung (SU) durchzuführen, sodass die elektrische Maschine (10) von einem normalen Betriebszustand (NB) in einen sicheren Betriebszustand (SB) bringbar ist.

6. Elektrische Maschine (10) nach Anspruch 5,
**dadurch gekennzeichnet,**
**dass** die Normalposition (A) und die Sicherheitsposition (B) jeweils eine stabile Lage des zweiten Teilrotors (42) bilden, sodass insbesondere der zweite Teilrotor (42) relativ zum ersten Teilrotor (41) ausschließlich bistabil drehbar ausgeführt ist.

7. Elektrische Maschine (10) nach Anspruch 5 oder 6,
**dadurch gekennzeichnet,**
**dass** die Mechanik (70) mindestens ein Federelement (71) umfasst, welches durch eine Entriegelung und/oder Umschaltung der Mechanik (70) derart mit dem zweiten Teilrotor (42) in Wirkverbindung bringbar ist, dass durch eine Kraftübertragung von dem Federelement (71) auf den zweiten Teilrotor (42) die Sicherheitsumschaltung (SU) durchführbar ist.

8. Elektrische Maschine (10) nach einem der Ansprüche 5 bis 7,
**dadurch gekennzeichnet,**
**dass** die Mechanik (70) bistabil schaltbar ausgeführt ist, wobei die Mechanik (70) vorzugsweise eine vorgespannte Feder als Federelement (71) aufweist, welche bei einem Umschalten zur Durchführung der Sicherheitsumschaltung (SU) freigebbar ist.

9. Elektrische Maschine (10) nach einem der Ansprüche 5 bis 8,
**dadurch gekennzeichnet,**
**dass** die elektrische Maschine (10) gemäß einem Verfahren (100) nach einem der Ansprüche 1 bis 4 betreibbar ist.

10. System zur Durchführung einer mechanischen Sicherheitsumschaltung (SU), aufweisend:
- eine elektrische Maschine (10), insbesondere nach einem der Ansprüche 5 bis 9,
- eine elektrische Überwachungsvorrichtung (80), wobei die Überwachungsvorrichtung (80) dazu ausgeführt ist, einen für die elektrische Maschine (10) kritischen Zustand innerhalb und/oder außerhalb der elektrischen Maschine (10) zu detektieren, und die Sicherheitsumschaltung (SU) an der elektrischen Maschine (10) zu initiieren.

11. System nach Anspruch 10,
**dadurch gekennzeichnet,**
**dass** die elektrische Überwachungsvorrichtung (80) eine Position des zweiten Teilrotors (42) erfasst, sodass durch eine Detektion der Überwachungsvorrichtung (80) eine Normalposition (A) von einer Sicherheitsposition (B) unterscheidbar ist.

12. System nach Anspruch 10 oder 11,
**dadurch gekennzeichnet,**
**dass** das System gemäß einem Verfahren (100) nach einem der Ansprüche 1 bis 4 betreibbar ist.
